# EUROPEAN PATENT SPECIFICATION

(11) **EP 1 875 086 B1**
(45) Date of publication and mention of the grant of the patent: **10.09.2008**
(21) Application number: 06726845.8
(22) Date of filing: 20.04.2006
(51) Int. Cl.: F16B 37/12

(54) **IMPROVEMENTS IN AND RELATING TO A FASTENER**
VERBESSERUNGEN EINES BEFESTIGUNGSELEMENTS UND DIESES BETREFFEND
AMELIORATIONS APPORTEES A UNE PIECE DE FIXATION ET S'Y RAPPORTANT

(30) Priority: 26.04.2005 GB 0508397
(43) Date of publication of application: 09.01.2008
(73) Proprietor: Tappex Thread Inserts Limited, Stratford-on-Avon, Warwickshire CV37 9NT (GB)
(72) Inventor: BARNSDALE, Timothy John Roderic, Stratford on Avon, Warwickshire CV37 9NT (GB)
(74) Representative: Hackett, Sean James
(86) International application number: PCT/GB2006/001455
(87) International publication number: WO 2006/114583

(56) References cited:
- EP-A- 1 048 858
- DE-U1- 20 001 429
- GB-A- 1 415 815
- GB-A- 1 482 624
- US-A1- 2002 131 843

## Description

The present invention relates to an improved fastener, and, in particular, to a threaded fastener or insert arranged in use to be self threading into a workpiece. Such a fastener is known from DE 200 01 429U or from GB 1 415 815.

Such fasteners are typically provided with an internal thread and are inserted into a hole in a workpiece, such as a plastic workpiece, in order to receive a complementary fastening element. Such inserts are used where inserting the complementary fastening element directly into the workpiece would result in inadequate pull-out resistance and a weak re-usable thread, the workpiece invariably being of a lower tensile strength than the fastener. However it will be understood that there is a need to maintain tolerances on the dimensions of the hole for receiving the fastener and on the dimensions of the fastener itself to maintain cutting efficiency.

It is an advantage of the present invention that beneficial insertion and pull-out characteristics can be obtained. Other advantages of the invention will be made apparent below.

According to a first aspect of the present invention a fastener comprises a generally cylindrical body about which is formed a thread, a first set of shaped flutes formed in the fastener towards one end of the fastener extending from said one end at least a part of a longitudinal distance along the fastener, each of the shaped flutes intersecting the thread first on one side along a line parallel to a longitudinal axis of the fastener and on second side along an arcuate line, the shaped flutes intersecting the thread along the second side to define cutting edges at the intersections, the cutting edges acting to cut threads during use of the fastener, the radial outer edge of the thread between the shaped flutes having substantially constant radius. According to the invention, the fastener further comprises a second set of flutes formed in the thread, the second set of flutes also intersecting the thread, the radial outer edge of the thread between the second set of flutes also having substantially constant radius.

Preferably, each of the first set of shaped flutes extend into the generally cylindrical body of the fastener beyond the depth of the thread.

Preferably the first set of shaped flutes and the second set of flutes alternate about the circumference of the fastener body.

Preferably the first set of flutes and the second set of flutes are spaced equiangularly about the fastener body.

Preferably the flutes in the second set of flutes extend to less than half the depth of the thread.

Preferably the length of the thread between the flutes in the second set of flutes is greater than the lengths of the flutes in the circumferential direction.

According to a second aspect of the invention a fastener in accordance with the first aspect of the invention is inserted into a workpiece, in use, the thread of the fastener cutting a complementary thread on the workpiece, the depth of the complementary thread cut by the fastener thread being greater than the depth of the second set of flutes.

The invention will now be described, by way of example only, with reference to the accompanying drawings, in which:-
Figure 1 shows a side view of a fastener in accordance with the present invention (part of which is shown in section along line A-A of Figure 3);
Figure 2 shows a section on line B-B of Figure 1;
Figure 3 shows an end view of the fastener shown in Figure 1; and
Figure 4 shows an enlarged detail in the direction of arrow C of Figure 1

Referring to the drawings a fastener 10 in accordance with the present invention is shown. The fastener 10 is in the form of a headed insert. The fastener comprises a cylindrical body 12 formed with an internal thread 14. In the illustrated embodiment, the body 12 is provided at a first end with a chamfer 16 to aid location and insertion in an opening in a workpiece (not shown). The fastener 10 is provided with a headed portion 18 in the form of a thickened portion or flange at a second end of the body 12.

A thread 20 is provided about the outer surface of the body 12, extending between the first end of the body 12 and the second end of the body 12. While in the illustrated embodiment a single thread is shown, the invention is contemplated for use with multi-start fasteners and accordingly references to a thread should be understood to apply to two or more threads for such a fastener. In the illustrated embodiment, it can be seen that the thread 20 carries the taper of the chamfer 16.

It will also be seen that the headed portion 18 extends radially only as far as does the thread 20. The headed portion 18 provides the fastener in use with a bearing surface against which a mating part may sit. The headed portion 18 also provides a stop to prevent the fastener being installed too far below the surface of the workpiece (incorrect location in this manner can leave an air gap into which the fastener may be jacked up as a complementary fastening element is tightened to the fastener 10).

The fastener 10 may be formed from any suitable material. Suitable materials include, but are not limited to, brass or steel.

A first set of grooves, notches or shaped flutes 22 are formed in the fastener at the first end of the fastener 10 extending from the first end at least a part of a longitudinal distance along the fastener 10. In the illustrated embodiment the first set of shaped flutes 22 comprises three identical such shaped flutes 22 equiangularly spaced about the fastener. Each of the shaped flutes 22 intersects the thread 20, first on one side along a line parallel to a longitudinal axis of the fastener and on a second side along an arcuate line, the shaped flutes 22 intersecting the thread along the second side to define cutting edges 24 at the intersections, the cutting edges 24 acting to cut threads during use of the fastener.

As seen from the first end the radial diameter of the thread 20 is initially at a minimum and, due to the chamfer, as the thread progresses around the fastener toward the second end, the outer diameter increases until the thread has a substantially constant radius. In use, the angle of the chamfer determines the distribution of cut swarf into the first shaped flutes 22.

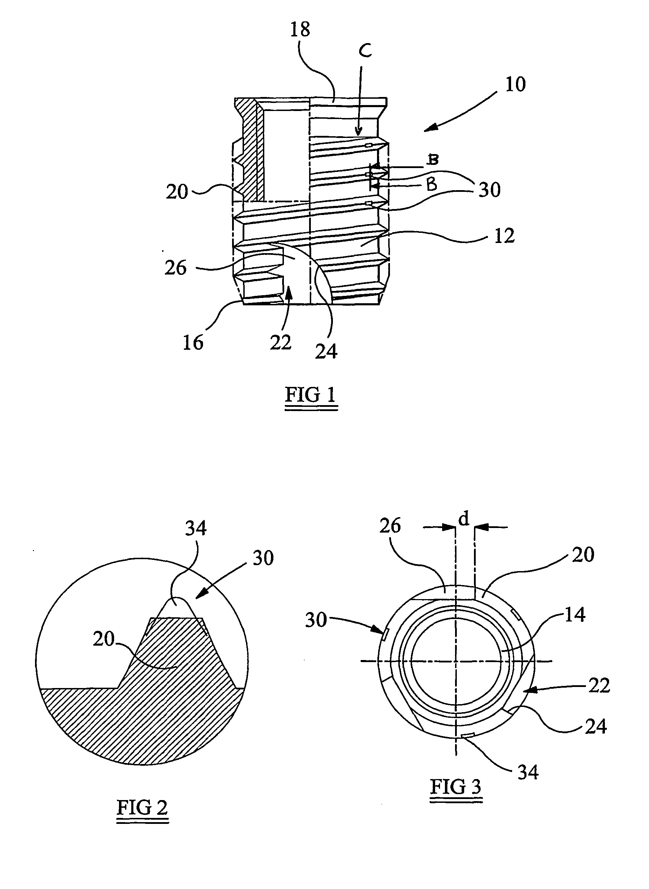

As may be seen from Figure 3, the shaped flutes 22 are formed as cutting flats 26 formed tangentially to the longitudinal axis of the fastener 10. While the shaped flutes 22 extend into the thickness of the body 12 of the fastener 10, they do not break through into the internal thread 14. This enables the body 12 to maintain its strength in use such that it does not collapse.

With further reference to Figure 3 it may be seen that the cutting edges 24 of the shaped flutes 22 are each offset a distance 'd' from a centre line of the fastener 10. This offset creates a positive rake angle with sufficient sweep on the facet to enable swarf produced during the cutting process to be directed away from the thread 20 such that the swarf does not become jammed between the fastener 10 and the workpiece into which the fastener is being inserted.

At the first full thread after the lead-in chamfer, the cutting facet, as precisely shown at 24, is preferably still at an angle less than 90 degrees to the longitudinal to ensure that free cutting and dropping away of the cut swarf takes place at the major diameter of the external thread, after the lead-in chamfer has run out.

A second set of indents, grooves or flutes 30 (shown in ghost in Figure 3) are formed in the thread 20. The second set of flutes 30 are located towards the second end of the fastener 10 and are spaced equiangularly about the fastener. In the illustrated embodiment the second set of flutes 30 comprises three flutes 30, each of which extend parallel to the longitudinal axis of the fastener 10. Each of the second set of flutes 30 intersects thread 20 to define a set of partially cutting/partially forming edges 34 at the intersections. The thread 20 is partially radially inwardly deformed. The radial outer edge of the thread 20 between the second set of flutes 30 also maintains the substantially constant radius.

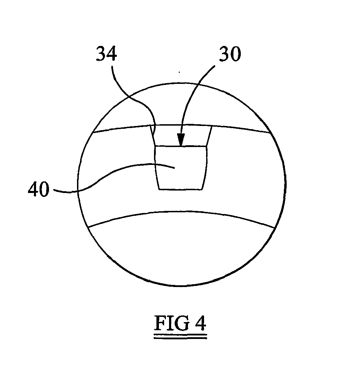

One of the second set of flutes 30 are shown in cross section in Figure 4. Whereas the first set of flutes 22 have a positive cutting rake, the second set of flutes 30 have a negative rake angle, as their primary purpose is to deform the external thread 20 of the fastener 10.

In the illustrated embodiment, each of the second set of flutes 30 extends across three turns of the thread 20. However, they may extend across two or more turns of the thread. The second set of flutes 30 start only after the thread 20 extends beyond the first set of shaped flutes 22 and preferably only after the thread 20 has completed a complete sweep after being intersected by the first set of shaped flutes 22.

In the illustrated embodiment each of the flutes of the second set of flutes 30 is angularly located centrally between neighbouring shaped flutes 22 of the first set of shaped flutes 22.

In use the second set of flutes 30 provide a locking action to the fastener 10 when the fastener 10 is subject to vibration conditions. A full thread to the major diameter of the fastener is initially cut in the parent material of the workpiece. During a latter part of the installation process, the deformed thread 40 radially below flutes 30 locks into the cut thread. The second set of flutes 30 will also provide resistance to prevent unscrewing of the fastener 10 from a workpiece when a complementary fastening element such as a bolt is undone or becomes corroded.

## Claims

1. A fastener comprising a generally cylindrical body (12) about which is formed a thread (20), a first set of shaped flutes (22) formed in the fastener towards one end of the fastener extending from said one end at least a part of a longitudinal distance along the fastener, each of the shaped flutes (22) intersecting the thread (20) first on one side along a line parallel to a longitudinal axis of the fastener and on second side along an arcuate line, the shaped flutes (22) intersecting the thread (20) along the second side to define cutting edges (24) at the intersections, the cutting edges (24) acting to cut threads during use of the fastener, the radial outer edge of the thread (20) between the shaped flutes (22) having substantially constant radius **characterized in that** the fastener further comprises a second set of flutes (30) formed in the thread, the second set of flutes (30) also intersecting the thread (20), the radial outer edge of the thread (20) between the second set of flutes (30) also having substantially constant radius.

2. A fastener according to claim 1, **characterised in that** each of the first set of shaped flutes (22) extend into the generally cylindrical body (12) of the fastener beyond the depth of the thread (20).

3. A fastener according to either claim 1 or claim 2, **characterised in that** the first set of shaped flutes (22) and the second set of flutes (30) alternate about the circumference of the fastener body (12).

4. A fastener according to any previous claim, **characterised in that** the first set of flutes (22) and the second set of flutes (30) are spaced equiangularly about the fastener body.

5. A fastener according to any previous claim, **characterised in that** the flutes in the second set of flutes (30) extend to less than half the depth of the thread (20).

6. A fastener according to any previous claim, **characterised in that** the length of the thread (20) between the flutes in the second set of flutes (30) is greater than the lengths of the flutes in the circumferential direction.

7. Use of a fastener in accordance with any previous claim in which when the fastener is inserted into a workpiece, the thread (20) of the fastener cuts a complementary thread on the workpiece, the depth of the complementary thread cut by the fastener thread (20) being greater than the depth of the second set of flutes (30).

## Patentansprüche

1. Befestigungselement, das aufweist: einen im Allgemeinen zylindrischen Körper (12), um den ein Gewinde (20) gebildet wird; eine erste Reihe von Formrillen (22), die im Befestigungselement in Richtung eines Endes des Befestigungselementes gebildet werden, die sich von einem Ende mindestens über einen Teil einer Längsstrecke entlang des Befestigungselementes erstrecken, wobei eine jede der Formrillen (22) das Gewinde (20) zuerst auf einer Seite längs einer Linie parallel zu einer Längsachse des Befestigungselementes und auf einer zweiten Seite längs einer gebogenen Linie schneidet, wobei die Formrillen (22) das Gewinde (20) längs der zweiten Seite schneiden, um Schneidkanten (24) in den Schnittpunkten zu definieren, wobei die Schneidkanten (24) wirken, um Gewinde während der Benutzung des Befestigungselementes zu schneiden, wobei der radiale äußere Rand des Gewindes (20) zwischen den Formrillen (22) einen im Wesentlichen konstanten Radius aufweist; und **dadurch gekennzeichnet, dass** das Befestigungselement außerdem eine zweite Reihe von Rillen (30) aufweist, die im Gewinde gebildet werden, wobei die zweite Reihe von Rillen (30) ebenfalls das Gewinde (20) schneidet, wobei der radiale äußere Rand des Gewindes (20) zwischen der zweiten Reihe von Rillen (30) ebenfalls einen im Wesentlichen konstanten Radius aufweist.

2. Befestigungselement nach Anspruch 1, **dadurch gekennzeichnet, dass** sich eine jede der ersten Reihe von Formrillen (22) in den im Allgmeinen zylindrischen Körper (12) des Befestigungselementes über die Tiefe des Gewindes (20) hinaus erstreckt.

3. Befestigungselement nach entweder Anspruch 1 oder Anspruch 2, **dadurch gekennzeichnet, dass** sich die erste Reihe von Formrillen (22) und die zweite Reihe von Rillen (30) um den Umfang des Körpers (12) des Befestigungselementes herum abwechseln.

4. Befestigungselement nach einem der vorhergehenden Ansprüche, **dadurch gekennzeichnet, dass** die erste Reihe von Rillen (22) und die zweite Reihe von Rillen (30) gleichwinkelig um den Körper des Befestigungselementes herum beabstandet sind.

5. Befestigungselement nach einem der vorhergehenden Ansprüche, **dadurch gekennzeichnet, dass** sich die Rillen in der zweiten Reihe von Rillen (30) auf weniger als die Hälfte der Tiefe des Gewindes (20) erstrecken.

6. Befestigungselement nach einem der vorhergehenden Ansprüche, **dadurch gekennzeichnet, dass** die Länge des Gewindes (20) zwischen den Rillen in der zweiten Reihe von Rillen (30) größer ist als die Längen der Rillen in der Umfangsrichtung.

7. Verwendung eines Befestigungselementes nach einem der vorhergehenden Ansprüche, bei der, wenn das Befestigungselement in ein Werkstück eingesetzt wird, das Gewinde (20) des Befestigungselementes ein komplementäres Gewinde auf das Werkstück schneidet, wobei die Tiefe des komplentären Gewindes, das durch das Gewinde (20) des Befestigungselementes geschnitten wird, größer ist als die Tiefe der zweiten Reihe von Rillen (30).

## Revendications

1. Elément de fixation, comprenant un corps généralement cylindrique (12) autour duquel est formé un filet (20), un premier ensemble de cannelures profilées (22) formées dans l'élément de fixation, en direction d'une extrémité de l'élément de fixation, s'étendant de ladite une extrémité sur au moins une partie d'une distance longitudinale le long de l'élément de fixation, chacune des cannelures profilées (22) formant une intersection avec le filet (20), en premier lieu sur un côté, le long d'une ligne parallèle à un axe longitudinal de l'élément de fixation et sur un deuxième côté, le long d'une ligne arquée, les cannelures profilées (22) formant une intersection avec le filet (20) le long du deuxième côté pour définir des arêtes de coupe (24) au niveau des intersections, les arêtes de coupe (24) servant à couper les filets au cours de l'utilisation de l'élément de fixation, le bord radial externe du filet (20) entre les cannelures profilées (22) ayant un rayon pratiquement constant, **caractérisé en ce que** l'élément de fixation comprend en outre un deuxième groupe de cannelures (30) formées dans le filet, le deuxième groupe de cannelures (30) formant aussi une intersection avec le filet (20), le bord radial externe du filet (20) entre le deuxième groupe de cannelures (30) ayant également un rayon pratiquement constant.

2. Elément de fixation selon la revendication 1, **caractérisé en ce que** chaque cannelure du premier groupe de cannelures (22) s'étend dans le corps généralement cylindrique (12) de l'élément de fixation, au-delà de la profondeur du filet (20).

3. Elément de fixation selon les revendications 1 ou 2, **caractérisé en ce que** le premier groupe de cannelures profilées 522) et le deuxième groupe de cannelures (30) sont formés par alternance autour de la circonférence du corps de l'élément de fixation (12).

4. Elément de fixation selon l'une quelconque des revendications précédentes, **caractérisé en ce que** le premier groupe de cannelures (22) et le deuxième groupe de cannelures (30) sont espacés à angles égaux autour du corps de l'élément de fixation.

5. Elément de fixation selon l'une quelconque des revendications précédentes, **caractérisé en ce que** les cannelures dans le deuxième groupe de cannelures (30) s'étendent sur une distance représentant moins de la moitié de la profondeur du filet (20).

6. Elément de fixation selon l'une quelconque des revendications précédentes, **caractérisé en ce que** la longueur du filet (20) entre les cannelures dans le deuxième groupe de cannelures (30) est supérieure aux longueurs des cannelures dans la direction circonférentielle.

7. Utilisation d'un élément de fixation selon l'une quelconque des revendications précédentes, dans lequel le filet (20) de l'élément de fixation coupe un filet complémentaire sur la pièce à usiner lors de l'insertion de l'élément de fixation dans une pièce à usiner, la profondeur du filet complémentaire coupé par le filet de l'élément de fixation (20) étant supérieure à la profondeur du deuxième groupe de cannelures (30).
